# EUROPÄISCHE PATENTANMELDUNG

(11) **EP 2 730 552 A1**
(43) Veröffentlichungstag der Anmeldung: **14.05.2014**
(21) Anmeldenummer: 13005272.3
(22) Anmeldetag: 08.11.2013
(51) Int. Cl.: C04B 35/48, C04B 35/584, C04B 35/622, F27B 14/00

(54) **Keramischer Kompositwerkstoff, durch diesen gebildetes Bauteil und Verfahren zur Herstellung des Kompositwerkstoffs**

(30) Priorität: 09.11.2012 DE 102012021906; 09.11.2012 DE 202012010696 U
(71) Anmelder: FCT Ingenieurkeramik GmbH, 96528 Rauenstein (DE)
(72) Erfinder: Berroth, Karl, Dr., 96528 Frankenblick (DE); Degenhardt, Ulrich, Dr., 96450 Coburg (DE); Stegner, Frank, 96465 Wildenheid (DE)
(74) Vertreter: Weihrauch, Frank

(57) **Zusammenfassung**

Die vorliegende Erfindung betrifft einen keramischen Kompositwerkstoff, aufweisend ein Grundkomposit und eine Oberflächenschicht, wobei das Grundkomposit durch einen Stoffanteil Si3N4 und einen Stoffanteil Zr02 gebildet wird und wobei die beiden Stoffanteile miteinander vermischt vorliegen und wobei die Oberflächenschicht oxidations- und korrosionsbeständig ausgebildet ist und aus SiO2 und ZrO2 und/oder ZrSi04 besteht und wobei die Oberflächenschicht durch eine Wärmebehandlung des Grundkomposits und eine dadurch bewirkbare, oberflächennahe chemische Stoffumwandlung bereitgestellt wird, sowie ein, aus diesem Kompositwerkstoff gebildetes, metallurgiewerkstoffberührendes Bauteil und ein Verfahren zur Herstellung des Kompositwerkstoffs.

## Beschreibung

Die Erfindung betrifft einen keramischen Kompositwerkstoff und ein durch diesen gebildetes Bauteil als schmelze- oder umformmaterialberührendes Bauteil, sowie ein Verfahren zur Herstellung des Kompositwerkstoffs.

In der Schmelzmetallurgie werden für schmelzeberührende Komponenten wie Ofenauskleidungen, Tiegel, Gießrinnen oder Dosierlöffel Werkstoffe benötigt, die insbesondere eine gute Festigkeit, eine gute Thermoschockbeständigkeit, eine gute chemische Beständigkeit sowie ein vorteilhaftes Benetzungsverhalten gegenüber der jeweiligen Schmelze besitzen.

Für Bauteile, die in direktem Kontakt zu Nichteisenmetall-Schmelzen stehen, werden bisher im Wesentlichen Werkstoffe auf Basis von Mullit, Quarzgut, Schamotte, Al2TiO5, SiC beziehungsweise silikatisch gebundene Materialien verwendet. Durch die intrinsische Sprödigkeit und die zumeist poröse Struktur sind die mechanischen Eigenschaften dieser Werkstoffe jedoch vergleichsweise schlecht beziehungsweise die mechanische Belastbarkeit gering.
In der Folge wirken sich insbesondere mechanische Belastungen wie Schlag, Stoß oder hohe Biegespannungen im Handling und Betrieb limitierend auf die Standzeit der Komponenten aus und führen zu vorzeitigem Bauteilversagen beziehungsweise Kantenausbrüchen.
Dadurch kann es wiederum bei der Verarbeitung von Schmelzen mit einer niedrigen Dichte zur Kontamination der Schmelze kommen, wenn Bruchstücke auf den Boden der Schmelztiegel absinken. Weiterhin können teure und empfindliche Komponenten wie Thermoelemente und Widerstandsheizer, die durch Schutz- beziehungsweise Heizrohre vor dem direkten Kontakt mit der Metallschmelze geschützt und abgeschirmt werden, bei einem Versagen des Schutzbeziehungsweise Heizrohres durch den Kontakt mit der eindringenden Schmelze zerstört werden.

Neben der rein mechanischen beziehungsweise thermomechanischen Zerstörung sind aber vor allem die silikatisch gebundene Werkstoffe nur begrenzt beständig gegenüber Nichteisenmetall-Schmelzen. Dies führt sowohl zu reduzierten Standzeiten, als auch zur Kontamination der Schmelzen mit unerwünschten Elementen aus dem silikatischen Bindemittel.

Es ist weiterhin aus dem Stand der Technik bekannt, bei Eisen- oder Stahlguss-Anwendungen, sogenannte Feuerfest-Hilfsmittel, insbesondere meist teilporöse, grobkörnige Feuerfest-Werkstoffe auf Basis von MgO, Al2O3, Cordierit, Zr02 oder ZrSi04 zu verwenden.
Auch bei diesen Werkstöffen stellt sich jedoch bisher ebenfalls das Problem der zu geringen mechanische Belastbarkeit.

Darüber hinaus sind aus dem Stand der Technik allgemein keramische Werkstoffe bekannt, welche aufgrund ihrer vorteilhaften Eigenschaften in vielen Anwendungsbereichen Einsatzmöglichkeiten gefunden haben.
Derartige keramische Werkstoffe werden insbesondere in der Schmelzmetallurgie als schmelzeberührende Bauteile, in der Umformtechnik als umformmaterialberührende Bauteile oder als Aufnahmen oder Auflagen in der Wärmebehandlungstechnik, insbesondere bei einem Glühen, eingesetzt.

Es ist darüber hinaus bekannt, derartige Keramikwerkstoffe als Siliziumnitridkeramiken (Si3N4) auszubilden, wobei für die oben genannten Anwendungsgebiete insbesondere die hohe Festigkeit, Risszähigkeit, Verschleiß-, Korrosions- und Temperaturwechselbeständigkeit, die geringe Dichte und thermischen Ausdehnung von Siliziumnitridkeramiken vorteilhaft sind.

Die Verwendung von Siliziumnitridkeramiken für schmelzeberührende Bauteile hat sich zwar für Nichteisenmetalle und -schmelzen, insbesondere auf Basis von Aluminium, Zinn und Zink, bewährt, ist aber für Eisen-, Stahlguss oder hochlegierte Schmelzen und Bauteile unter mehreren Aspekten nachteilig.

Zum einen stellen sich hierbei unerwünschte Reaktionen des Siliziumnitrids mit dem Element Eisen, beziehungsweise eisenähnlichen Elementen, welche üblicherweise in hochlegierten Cu-Schmelzen und Stahlguss oder den daraus hergestellten Bauteilen enthalten sind, ein.

Zum anderen kommt es zur Bildung von Reaktionsprodukten, wie zum Beispiel FeSi, welche eine unvorteilhafte Anhaftung der Schmelze und eine Schädigung des Siliziumnitrids von der Oberfläche aus bewirken können (korrosiver Angriff). Dies wiederum führt zu einer Herabsetzung der mechanischen Eigenschaften des Bauteils sowie einem erhöhten Verschleiß.
Diesen Effekten wird in der Regel mit entsprechend großen Materialstärken und - dicken begegnet wird, um trotz des Verschleißes eine annehmbare Standzeit des jeweiligen Bauteils oder Werkzeuges bereitzustellen.

Somit müssen bei der Bereitstellung und Verwendung derartiger Bauteile hohe Bereitstellungskosten und hohe Instandhaltungskosten in Kauf genommen werden.

Ein weiterer Nachteil besteht darin, dass es bei den oben genannten Effekten zu einer Verunreinigung der Schmelze mit den Korrosions- und/oder Verschleißprodukten oder oberflächlichen Materialausbrüchen kommen kann.

Ferner ist es aus dem Stand der Technik bekannt, keramische Werkstoffe als Zirkonoxidkeramiken (Zr02) auszubilden.
Zirkonoxidkeramiken weisen eine hohe Raumtemperaturfestigkeit und Bruchzähigkeit auf und werden daher bevorzugt als Implantatwerkstoff, als Verschleißteil im Maschinenbau oder als Werkstoff für technische Schneiden eingesetzt.

Die Nachteile der Zirkonoxidkeramiken liegen jedoch in der mit zunehmender Temperatur abnehmenden Festigkeit, dem vergleichsweise niedrigen Elastizitätsmodul und in dem hohen Wärmeausdehnungskoeffizienten, welcher insbesondere die Verwendbarkeit unter hohen Temperaturen und bei großen Temperaturwechseln einschränkt, und in einer, je nach Anwendungsfall nicht gewünschten, geringen Wärmeleitfähigkeit.

Um die vorteilhaften Eigenschaften von Siliziumnitrid und Zirkonoxid zumindest teilweise zu kombinieren, wurden weiterhin bereits Si3N4-Zr02-Verbundwerkstoffe entwickelt.

Ein solcher Verbundwerkstoff ist insbesondere aus Druckschrift US 4 640 902 A bekannt.
Der hier offenbarte Verbundwerkstoff wurde auf eine hohe Risszähigkeit hin optimiert und weist sowohl eine gute Risszähigkeit und eine geringe Wärmeleitfähigkeit als auch eine gute chemische Beständigkeit auf.

Jedoch können auch durch den hier beschriebenen Verbundwerkstoff die Nachteile der Korrosion der Oberfläche bei Berührung mit hochlegierten Kupfer-, beziehungsweise eisen- oder stahlbasierten Schmelzen sowie das ungünstige Benetzungsverhalten nicht vermieden werden.

Eine Möglichkeit die aufgeführten Nachteile innerhalb der Schmelzmetallurgie zu überwinden besteht in der Verwendung von Graphitbauteilen und -beschichtungen, welche in der Regel zwar zunächst kostengünstig sind, jedoch eine wesentlich geringere Standzeit aufweisen.
Graphitbauteile und -beschichtungen brennen bei Luftkontakt bereits oberhalb von etwa 600°C ab und werden zudem von der Schmelze angegriffen und zum Teil aufgelöst.

Derartige Bauteile sind daher in der Regel als kurzlebige Bauteile ausgeführt, was jedoch entsprechend längere Stillstands- und Rüstzeiten sowie im Ergebnis hohe Kosten bedingt.

Des Weiteren können derartige Graphitbauteile und -beschichtungen zu einem unerwünschten Aufkohlen des Metalls, beziehungsweise zur Entstehung unerwünschter, karbidischer Phasen führen.
Um dies zu vermeiden, werden in der Regel oxidkeramische Schichten aufgebracht, die den Graphit jedoch oxidieren.
Oft werden auch teure und ebenfalls nicht langzeitstabile Molybdänbleche oder - folien zwischen Graphit und Metall gebracht.

Im Hinblick auf die Nachteile des Standes der Technik ist es somit Aufgabe der Erfindung, einen keramischen Werkstoff, welcher oxidations- und korrosionsfeste und gleichzeitig benetzungsoptimierte Eigenschaften aufweist, auch unter hohen Temperaturen beständig und mechanisch belastbar ist sowie eine gute Wärmeleitfähigkeit aufweist und einfach herstellbar ist, und ein Verfahren zu dessen Herstellung sowie ein, einen heißen Metallurgiewerkstoff oder eine Schmelze berührendes, Bauteil bereitzustellen.

Die Aufgabe wird im Bezug auf den keramischen Kompositwerkstoff durch die in den Patentansprüchen 1 bis 3 aufgeführten Merkmale, in Bezug auf das, durch den keramischen Kompositwerkstoff gebildete, Bauteil durch die in den Patentansprüchen 4 und 5 aufgeführten Merkmale und in Bezug auf das Verfahren durch die in den Patentansprüchen 6 bis 8 aufgeführten Merkmale gelöst. Bevorzugte Weiterbildungen ergeben sich aus den Unteransprüchen.

Ein erfindungsgemäßer keramischer Kompositwerkstoff weist ein Grundkomposit und eine Oberflächenschicht auf.

Dabei wird das Grundkomposit durch einen Stoffanteil Siliziumnitrid (Si3N4) und einen Stoffanteil Zirkonoxid (Zr02) gebildet, wobei die beiden Stoffanteile miteinander vermischt vorliegen.
Die beiden Stoffanteile liegen darüber hinaus vorzugsweise als Pulver vor, wobei das Zr02 sowohl als synthetisches Pulver als auch als natürlich vorkommendes, Zr02-haltiges Mineral oder als Zr-haltiger Precursor , wie zum Beispiel Sol, sowie als eine Mischung aus diesen vorliegen kann.
Außerdem kann es sich bei dem zugesetzten Zr02 sowohl um stabilisierte, teilstabilisierte oder unstabilisierte Verbindungen sowie deren Mischungen handeln. Des Weiteren kann das Si3N4 erfindungsgemäß sowohl in einer alpha- oder einer beta-Modifikation sowie bevorzugt in einer Kombination beider Kristallstrukturen vorliegen.

Das Grundkomposit liegt nach dem Vermischen der beiden Stoffanteile beispielsweise als drucklos beziehungsweise druckunterstützt vergießbarer Schlicker, thermoplastisch verarbeitbare Masse beziehungsweise Granulat oder als trockenpressbares Pulver beziehungsweise Granulat vor.

Die Formgebung des Grundkomposits erfolgt im Anschluss wahlweise durch drucklose oder druckunterstützte Schlickerguss-Verfahrenstechniken, thermoplastische Formgebungsverfahren wie Spritzguss oder Extrusion, durch uniaxiales oder kaltisostatisches Trockenpressen oder durch eine Vorkompaktierung für ein anschließendes warm- beziehungsweise heißisostatisches Pressen oder Spark Plasma Sintering.

Insbesondere bei der Anwendung eines Sinterverfahrens besteht ein wesentlicher Vorteil des erfindungsgemäßen Kompositwerkstoffs darin, dass, im Gegensatz zu bekannten, gattungsgemäßen Kompositwerkstoffen und deren Herstellungsverfahren, das Zr02 bei den erfindungsgemäßen Kompositwerkstoffen nicht nur als Sinteradditiv dient, sondern eine zweite Werkstoffphase bildet. Durch die unterschiedlichen Eigenschaften der beiden Phasen Si3N4 und Zr02 lassen sich durch eine Variation des Zr02-Anteils die Werkstoffkenngrößen der erfindungsgemäßen Si3N4-ZrO2-Kompositkeramik in einem weiten Bereich einstellen.
Insbesondere können der E-Modul des Kompositwerkstoffs und dessen thermischer Ausdehnungskoeffizient sowie die Wärmeleitfähigkeit nach den Anforderungen der jeweiligen Anwendung eingestellt werden.

Ein weiterer Vorteil des Kompositwerkstoff, bei Anwendung eines Sinterverfahrens, besteht zudem darin, dass bei Verwendung von unstabilisiertem Zr02 ein Teil der Sinteradditive, die während des Verdichtungsprozesses zunächst eine zum Dichtsintern benötigte Flüssigphase bilden, vom Zr02 aufgenommen werden können.
Dies hat insbesondere den Vorteil, dass so zum Einen der Anteil einer anschließend im Werkstoff vorhandenen Glasphase, welche die Hochtemperatur- und Kriechbeständigkeit des Kompositwerkstoffs limitiert, verringert werden kann. Zum Anderen erfolgt durch diese partielle Aufnahme der Sinteradditive eine In-situ-Stabilisierung des Zr02 während des Sinterprozesses, durch welche die Phasenumwandlung tetragonal zu monoklin und die damit verbundene Volumenänderung verhindert werden.
Dies wirkt sich wiederum besonders positiv auf die mechanischen Eigenschaften, die Temperaturwechsel- und Thermoschockbeständigkeit sowie die Schadenstoleranz des erfindungsgemäßen Kompositwerkstoffs aus.

Darüber hinaus besteht ein weiterer Vorteil des erfindungsgemäßen Kompositwerkstoffs, bei Anwendung eines Sinterverfahrens, darin, dass durch die erfinungsgemäße Zusammensetzung und Prozessführung beim Sintern eine Zersetzung der Zr02-Phasenbestandteile zu Zirkonnitrid oder Zirkonoxynitrid im Inneren des Werkstoffes unterbunden werden kann, wie sie häufig bei bekannten, gattungsgemäßen Kompositwerkstoffen und deren Herstellungsverfahren auftritt. Ebenso erweisen sich die erfindungsgemäßen Kompositkeramiken auch besonders stabil unter oxidierenden Umgebungsbedingungen.

Ferner weist ein erfindungsgemäßer Kompositwerkstoff generell den wesentlichen Vorteil auf, dass die Verdichtung über einen Flüssigphasensinter-, Heißpress- oder Spark Plasma Sinteringprozess bei niedrigeren Temperaturen im Vergleich zu herkömmlichem Si3N4 stattfindet.

Im Mittel lassen sich die erfindungsgemäßen Kompositwerkstoffe bei um etwa 100°C niedrigerer Temperatur sintern beziehungsweise heißpressen als vergleichbare, aus dem Stand der Technik bekannte Si3N4-Werkstoffe.
Das Sintern beziehungsweise Heißpressen erfolgt daher bevorzugt im Temperaturbereich von 1600°C bis 1900°C, so dass sich der Herstellungsaufwand und die Herstellungskosten über die kürzere Prozesszeit, den niedrigeren Energieverbrauch und die geringere Ofenbelegungszeit verringern.

Um insbesondere eine Verdichtung des Grundkomposits während eines Sinterprozesses zu erleichtern weist dieses vorzugsweise zusätzliche Additive auf. Die Additive liegen dabei beispielsweise als mikro- oder nanoskalige metall-, übergangsmetall- oder seltenerdmetallhaltige Verbindungen vor, welche dem Grundkomposit beigegeben werden. Des Weiteren lässt sich das Additiv als eine Mischung mehrerer Einzelkomponenten als auch als bereits vorreagierte beziehungsweise vorsynthetisierte Verbindungen dem Grundkomposit zusetzen. Besonders bevorzugt handelt es sich bei diesen Additiven um metall-, übergangsmetall- oder seltenerdmetallhaltige Oxide, Nitride oder Oxinitride, deren Mischungen oder daraus vorreagierte beziehungsweise vorsynthetisierte Verbindungen.

Alternativ kann das Grundkomposit auch ein weiteres Additiv als Einfärbemittel oder karbidische Verstärkungsphase aufweisen.
Dieses Additiv wird aus der Gruppe der Oxide, Nitride, Karbide oder Oxi- beziehungsweise Carbonitride der Elemente Si, Ti, V, Cr, Mn, Fe, Co, Ni, Zr, Nb, Mo, Hf, Ta, W und La ausgewählt. Auch kann das weitere Additiv mehrere der genannten Verbindungen als Mischungen oder als vorreagierte Verbindungen umfassen.

Die vorgesehene Oberflächenschicht des Kompositwerkstoffs ist erfindungsgemäß oxidations- und korrosionsbeständig ausgebildet und besteht aus Si02 und Zr02 und/oder ZrSi04. Die Oberflächenschicht kann also in folgenden drei Alternativen vorliegen: erste Alternative: nur Si02 und Zr02, zweite Alternative: Si02 und Zr02 sowie ZrSi04, dritte Alternative: nur ZrSi04.
Dabei wird die Oberflächenschicht durch eine Wärmebehandlung des Grundkomposits und eine dadurch bewirkbare, oberflächennahe chemische Stoffumwandlung bereitgestellt, wobei die Wärmebehandlung des Grundkomposits vorzugsweise nach dem Sintern oder Heißpressen erfolgt.

Die Wärmebehandlung kann dabei beispielsweise durch Glühen des Grundkomposits bewirkt werden.

Als besonderer technologischer Vorteil der Erfindung wird die oxidations- und korrosionsbeständige Oberflächenschicht aus dem Grundkomposit selbst gebildet, wobei ein fließender, stoffschlüssiger Übergang des Grundkomposits in die Oberflächenschicht bereitgestellt wird.
Ein zusätzliches, aufwändiges und teures Aufbringen einer separaten Oberflächenschicht ist somit nicht mehr notwendig.

Durch die Erfindung wird auf besonders vorteilhafte Art und Weise ein Kompositwerkstoff bereitgestellt, welcher zum einen die positiven Eigenschaften von Siliziumnitrid und Zirkonoxid, insbesondere eine geringe Adhäsion, ein gutes Thermoschockverhalten und eine sehr gute Hochtemperaturfestigkeit sowie eine vergleichsweise hohe Wärmeleitfähigkeit, vereint und welcher zum anderen als besonderen technologischen Vorteil eine oxidations- und korrosionsbeständige Oberfläche aufweist, die zudem ein verbessertes Benetzungsverhalten aufweist und welche es ermöglicht, dass der erfindungsgemäße Kompositwerkstoff insbesondere in der Schmelzmetallurgie für schmelzeberührende Bauteile anwendbar ist.

Dabei kann die Oberflächenschicht des Kompositwerkstoffs besonders vorteilhaft bereits innerhalb des Sinterprozesses und somit in situ erzeugt werden und muss nicht durch einen separaten nachgelagerten Arbeitsschritt bereitgestellt werden. Bei der Anwendung eines Sinter-Formgebungsverfahrens wird es somit beispielsweise ermöglicht, den Kompositwerkstoff "as sintered" zu verwenden und somit auf eine entsprechende Hartbearbeitung nach dem Sintern zu verzichten.

Ferner weist der offenbarte Kompositwerkstoff den besonderen Vorteil auf, dass die Ausgangselemente zur Bildung der Oberflächenschicht intrinsisch in dem Grundkomposit gebunden sind und somit die Oberflächenschicht durch eine erneute Temperaturbeaufschlagung in einer oxidierenden Atmosphäre aus dem Grundkomposit jederzeit neu gebildet werden kann und wodurch, etwa durch Verschleiß oder Stoßeinwirkung entstandene, Oberflächendefekte behoben werden können.

Eine derartige Neubildung der Schutzschicht ist dabei unabhängig von der Größe, Position beziehungsweise Eindringtiefe der Beschädigung durch den hohen und homogenen ZrO2-Gehalt auch im Grundkomposit im Bauteilinneren stets gewährleistet. Dieser wirksame Selbstheilungs-, beziehungsweise -passivierungsmechanismus ermöglicht es, die Schutzwirkung gegenüber bauteil-, beziehungsweise funktionsgefährdenden Oxidations- und Korrosionseffekten, wesentlich länger aufrechtzuerhalten.

Der erfindungsgemäße Kompositwerkstoff eignet sich aufgrund seiner Eigenschaften insbesondere für einen Einsatz im Bereich der Schmelzmetallurgie, speziell im Bereich des Schmelzens von Buntmetallen, Kupfer, Messing oder Stahl, oder innerhalb der Umformtechnik, speziell im Bereich des Heißumformens oder in der Wärmebehandlungstechnik, insbesondere beim Glühen und Härten.

In einer bevorzugten Weiterbildung der Erfindung wird die Oberflächenschicht des Kompositwerkstoffes, bestehend aus Si02 und Zr02, durch eine Wärmebehandlung des Grundkomposits in einer oxidierenden Atmosphäre bereitgestellt.

Die Zusammensetzung und das Gefüge im Inneren des Kompositwerkstoffs bleiben dabei unverändert.

Als besonderer Vorteil lässt sich die Dicke der Oberflächenschicht dabei über die Auslagerungsbedingungen nach anwendungsspezifischen Anforderungen einstellen, wobei in jedem Fall auf dem Grundwerkstoff eine rissfreie, fest haftende Oberflächenschicht erzeugbar ist.

Außerdem wird hierdurch eine gute Benetzungs- und Schutzwirkung der Oberflächenschicht gegenüber Korrosion und/oder Oxidation bei einer Verwendung mit Nichtmetallschmelzen oder innerhalb von nichtmetallschmelzen-berührenden Bauteilen sowie in einer oxidierenden Atmosphäre bereitgestellt.

In einer weiteren besonders vorteilhaften Weiterbildung der Erfindung wird die Oberflächenschicht bestehend aus ZrSi04 durch eine Wärmebehandlung der Oberflächenschicht aus Si02 und Zr02 in einer oxidierenden Atmosphäre bereitgestellt.

Hierbei wird durch eine entsprechende Temperaturführung die Randschicht aus Si02 und Zr02 vollständig oder teilweise in glasphasenfreies, kristallines ZrSi04 umgewandelt, wodurch eine weiter erhöhte Schutzwirkung der Oberflächenschicht vor Oxidation und Korrosion, insbesondere bei Kontakt des Kompositwerkstoffs mit Stahl, eisenbasierten oder hochlegierten Metallen und Metallschmelzen in einer oxidierenden Atmosphäre und bei hohen Temperaturen, bereitstellbar ist.

Auch hierbei bleiben die Zusammensetzung und das Gefüge im Inneren des Kompositwerkstoffs unverändert.

Des Weiteren lässt sich auch in diesem Fall die Dicke der Oberflächenschicht dabei über die Auslagerungsbedingungen nach anwendungsspezifischen Anforderungen einstellen, wobei in jedem Fall auf dem Grundwerkstoff eine rissfreie, fest haftende Oberflächenschicht erzeugbar ist.

Eine mögliche Weiterverwendung des erfindungsgemäßen Kompositwerkstoffs besteht darin, eine elektrisch leitfähige Schicht aus ZrN auf dessen Oberfläche aufzubringen.

Diese ZrN-Schicht ist dabei geschlossen, weitestgehend porenfrei und weist eine sehr gute Anbindung an den Kompositwerkstoff auf. Weiterhin besitzt diese Oberflächenschicht eine gute thermodynamische Stabilität unter Luftatmosphäre bis ca. 600°C. Die Erzeugung dieser ZrN-Oberflächenschicht kann erfindungsgemäß auf zwei verschiedene Arten erfolgen:
Lässt sich der Kompositwerkstoff "as sintered" und ohne Hartbearbeitung in dem gewünschten Anwendungsbereich einsetzen, so kann die ZrN-Oberflächenschicht noch während des Hochtemperatursinterprozesses in-situ aufgebracht werden. Durch die Variation der Prozessparameter ist es dabei ebenso möglich, definiert ZrN-Schichten mit Schichtdicken von wahlweise einigen Mikrometern bis mehreren hundert Mikrometern an der Oberfläche zu erzeugen, während die Zusammensetzung und das Gefüge im Inneren der Kompositwerkstoffe unverändert bleiben. Auf einen separaten und gegebenenfalls kostenintensiven Beschichtungsprozess zur Erzeugung der elektrisch leitfähigen Schicht kann somit verzichtet werden.

Ist dagegen eine Hartbearbeitung nach dem Sintern unerlässlich, um die werkstoffspezifischen Anforderungen an die Geometrie, Maßhaltigkeit, Toleranzen beziehungsweise Oberflächengüte zu erreichen, so lässt sich die ZrN-Schicht auch durch einen separaten, der Hartbearbeitung nachgeschalteten Auslagerungsprozess gezielt aufbringen.
Auch in diesem Fall lässt sich die Schichtdicke gemäß den anwendungsspezifischen Anforderungen einstellen; die Zusammensetzung und das Gefüge im Inneren der Kompositwerkstoffe bleiben dagegen unverändert.

Vorzugsweise wird die ZrN-Schicht durch eine thermische Auslagerung unter Stickstoff- oder stickstoffhaltiger Atmosphäre gebildet, wobei eine teilweise stoffliche Umwandlung des in der Oberflächenschicht enthaltenen Zr02 zu ZrN erfolgt.
Die thermische Auslagerung kann dabei vorzugsweise direkt nach dem Sintern, beispielsweise innerhalb einer weiteren Haltezeit beim Abkühlen, erfolgen.

Ein metallurgiewerkstoffberührendes Bauteil gemäß dem Anspruch 4 wird erfindungsgemäß durch einen Kompositwerkstoff nach einem der Ansprüche 1 bis 3 gebildet.

Als Metallurgiewerkstoffe werden vorliegend insbesondere Schmelzen, wie beispielsweise Aluminium-, Buntmetall-, Kupfer-, Messing- oder Stahlschmelzen, umzuformende Werkstoffe und wärmezubehandelnde Werkstoffe, bezeichnet.

Umzuformende Werkstoffe sind Metalle bei hohen Temperaturen, wie beispielsweise bei einem Walzen, Schmieden etc.

Wärmezubehandelnde Werkstoffe sind Metalle, die einer Temperaturbehandlung zur Einstellung des gewünschten Gefüges beziehungsweise der gewünschten Eigenspannungen im Bauteil unterworfen werden, beispielsweise einem Härtungs- oder Glühprozess.

Ein erfindungsgemäßes Bauteil ist überall dort anwendbar, wo eine hohe Oxidations- und Korrosionsbeständigkeit bei einer gleichzeitig guten Festigkeit, Wärmeleitfähigkeit, Risszähigkeit und Thermoschockbeständigkeit bei der entsprechenden Einsatztemperatur gefordert ist.

Die Verwendung des erfindungsgemäßen Kompositwerkstoffs ermöglicht dabei die Bereitstellung von Bauteilen, welche, gegenüber den bisher für die jeweiligen Anwendungszwecke verwendeten Bauteilen, eine deutlich verbesserte Lebensdauer und Standzeit aufweisen.

In einer vorteilhaften Weiterbildung ist das Bauteil als Bestandteil eines Schmelzofens oder eines Umformwerkzeugs ausgebildet.
Die Verwendung des Bauteils als Bestandteil eines Schmelzofens inkludiert ebenfalls einen Einsatz im direkten Umfeld des Schmelzofens, beispielsweise innerhalb einer Gießrinne, eines Gießtrichters oder eines Dosierlöffels.

Innerhalb eines Schmelzofens kann ein erfindungsgemäßes Bauteil beispielsweise als Tiegel, als Steigrohr, als Thermoelementschutzrohr, als Heizrohr, als Gieß- oder Sprühdüse, als Rührerarm oder als Brennhilfsmittel ausgebildet sein, während das Bauteil in einem Umformwerkzeug beispielsweise als Walzring oder Zylinderwalze ausgebildet sein kann.

Ein Verfahren zur Herstellung eines erfindungsgemäßen keramischen Kompositwerkstoffs gemäß Anspruch 1, weist die folgenden Verfahrensschritte auf:
a) Vermischen eines Stoffanteils Si3N4 mit einem Stoffanteil Zr02 zu einem Grundkomposit,
b) Formgeben des Grundkomposits,
c) Wärmebehandeln des geformten Grundkomposits, wobei aus dem Grundkomposit eine oxidations- und korrosionsbeständige Oberflächenschicht aus Si02 und Zr02 und/oder ZrSi04 ausgebildet wird.

Im Verfahrensschritt a) erfolgt zuerst eine Vermischung eines Stoffanteils Si3N4 mit einem Stoffanteil Zr02.
Die beiden Stoffanteile liegen vorzugsweise in Pulverform vor, wobei der Stoffanteil Zr02 sowohl als synthetisches Pulver als auch als natürlich vorkommendes, Zr02-haltiges Mineral oder als Zr-haltiger Precursor, wie zum Beispiel Sol, sowie als eine Mischung aus diesen vorliegen kann.
Außerdem kann es sich bei dem zugesetzten Zr02 sowohl um stabilisierte, teilstabilisierte oder unstabilisierte Verbindungen sowie deren Mischungen handeln. Die Zugabe etwaiger weiterer Stoffanteile, insbesondere für ein Sintern notwendiger Additive, erfolgt ebenfalls in Verfahrensschritt a).

Die Vermischung erfolgt, vorzugsweise unter Zuhilfenahme einer geeigneten Mischvorrichtung und organischer Verbindungen, zum Beispiel Binder, Plastifizierer, Weichmacher oder Entschäumer, derart, dass die resultierende Mischung als drucklos bzw. druckunterstützt vergießbarer Schlicker, thermoplastisch verarbeitbare Masse beziehungsweise Granulat oder als trockenpressbares Pulver beziehungsweise Granulat vorliegt.

Im Anschluss an die Vermischung erfolgt in Verfahrensschritt b) die Formgebung des Werkstoffes.

Als Formgebungsverfahren werden hierbei insbesondere drucklose oder druckunterstützte Schlickerguss-Verfahrenstechniken, thermoplastische Formgebungsverfahren wie Spritzguss oder Extrusion, uniaxiales oder kaltisostatisches Trockenpressen mit anschließender Verdichtung des Grundkomposits durch einen Sinterprozess oder warm- beziehungsweise heißisostatisches Pressen oder Spark Plasma Sintering angewendet.

Bei einem Verdichten des Grundkomposits durch einen Sinterprozess können beispielsweise ein druckloses oder gasdruckunterstütztes Sintern angewendet werden.

Das Warm- beziehungsweise Heißisostatische Pressen und das Spark Plasma Sintering Verfahren haben dabei den technologischen Vorteil, dass die Verdichtung des Kompositwerkstoffes weitestgehend ohne die Zugabe weiterer Sinteradditive möglich ist.

In Verfahrensschritt c) erfolgt die Umwandlung des Grundkomposits in eine oxidations- und korrosionsbeständige Oberflächenschicht aus Si02 und Zr02 und/oder ZrSi04.
Die Umwandlung erfolgt durch eine Wärmebehandlung des Werkstoffs nach Formgebung, wobei sich die Wärmebehandlung erfindungsgemäß sowohl direkt an Verfahrensschritt b) anschließen kann oder auch durch eine nochmalige, separate Wärmebehandlung nach einem Abkühlen des Werkstoffs erfolgt.

In einer vorteilhaften Weiterbildung des Verfahrens wird die Wärmebehandlung zur Ausbildung einer Oberflächenschicht aus Si02 und Zr02 gemäß Verfahrensschritt c) in einem Temperaturbereich von 1000°C bis 1300°C und in einer oxidierenden Atmosphäre durchgeführt.

Der besondere Vorteil liegt hierbei darin, dass durch einen einfachen und bei moderaten Temperaturen stattfindenden Prozess, eine gute Schutzwirkung der Oberflächenschicht gegenüber oxidierenden Atmosphärenbedingungen sowie gegenüber Korrosion durch Nichteisenmetalle wie insbesondere Aluminium, Zinn und Zink bereitstellbar sind.

Ein andere vorteilhafte Weiterbildung des erfindungsgemäßen Verfahrens sieht vor, dass die Wärmebehandlung gemäß Verfahrensschritt c), zur zumindest teilweisen Ausbildung einer Oberflächenschicht aus ZrSi04, in einem Temperaturbereich von 1200°C bis 1600°C erfolgt.

Die Wärmebehandlung der Oberflächenschicht in dem genannten Temperaturbereich von 1200°C bis 1600°C hat insbesondere den technologischen Vorteil, dass durch eine entsprechende Temperaturführung die Randschicht aus Si02 und Zr02 vollständig oder teilweise in glasphasenfreies, kristallines ZrSi04 umwandelbar ist, wodurch eine nochmals erhöhte Schutzwirkung der Oberflächenschicht gegenüber oxidierenden Atmosphärenbedingungen und Korrosion sowie gegenüber Stahlguss und eisenbasierten beziehungsweise hochlegierten Schmelzen oder Metallurgiewerkstoffen bereitstellbar ist.

Darüber hinaus bleiben bei einer solchen Wärmebehandlung die Zusammensetzung und das Gefüge im Innern des Kompositwerkstoffs unverändert.

Ein erfindungsgemäßer Kompositwerkstoff sowie ein erfindungsgemäßes Verfahren zu dessen Herstellung und aus diesem gebildete Bauteile, werden anhand der nachfolgenden Ausführungsbeispiele näher erläutert.

Der erfindungsgemäße Kompositwerkstoff weist ein Grundkomposit und eine oxidations- und korrosionsbeständige Oberflächenschicht auf, wobei das Grundkomposit aus einem ersten Stoffanteil Si3N4 und einem zweiten Stoffanteil Zr02 besteht und wobei die beiden Stoffanteile miteinander vermischt vorliegen.

Der zweite Stoffanteil Zr02 beträgt vorliegend 5 bis 32 Gewichtsprozent bezogen auf die Gesamtmasse des Kompositwerkstoffs und wird vorliegend als synthetisches Pulver beigefügt.

Der erfindungsgemäße Kompositwerkstoff wird über ein geeignetes Formgebungsverfahren in die gewünschte Form gebracht und nachfolgend durch ein Sinterverfahren verdichtet.

Im vorliegenden Ausführungsbeispiel wird hierzu ein Sinterverfahren, speziell ein Flüssigphasensinterverfahren, angewendet, wobei das Sintern des Kompositwerkstoffs vorliegend in einem Temperaturbereich zwischen 1600°C und 1900°C erfolgt.

Um eine gewünschte Verdichtung während des Flüssigphasensinterns zu erleichtern, werden dem Kompositwerkstoff vorzugsweise weitere Sinterhilfsmittel zugesetzt. Der Anteil der zugesetzten Sinteradditive beträgt vorliegend 5 bis 15 Gewichtsprozent bezogen auf die Gesamtmasse des Kompositwerkstoffs.
Die zusätzlichen Sinteradditive werden dabei vorliegend in Form mikroskaliger metallhaltiger Verbindungen zugegeben.

Ferner weist der Kompositwerkstoff ein weiteres Additiv als Einfärbemittel auf, wobei der Anteil des weiteren Additivs maximal 10 Gewichtsprozent bezogen auf die Gesamtmasse des Kompositwerkstoffs beträgt und wobei das Additiv vorliegend aus der Gruppe der Oxide gewählt wird.

Insbesondere bei einem Sinterverfahren stellt sich der besondere technologische Vorteil ein, dass das Zr02 nicht nur als Sinteradditiv dient, sondern gleichzeitig eine zweite Werkstoffphase bildet.
Durch die unterschiedlichen Eigenschaften der beiden Werkstoffphasen Si3N4 und Zr02 lassen sich, durch eine Variation des Zr02-Anteils zwischen 5 und 30 Gewichtsprozent, die Werkstoffkenngrößen des erfindungsgemäßen Kompositwerkstoffs in einem weiten Bereich einstellen.
Insbesondere wird es hierdurch ermöglicht, dass der E-Modul des Kompositwerkstoffs zwischen 190 GPa und 320 GPa und dessen thermischer Ausdehnungskoeffizient zwischen 3,2*10-6 und 7.5*10-6 K-1 (jeweils bezogen auf einen Temperaturbereich von 0 bis 1000°C) einstellbar sind.

Die erfindungsgemäß vorgesehene Oberflächenschicht liegt in einem ersten Ausführungsbeispiel als Schicht aus Si02 und Zr02 vor und wird durch eine Wärmebeaufschlagung des Grundkomposits bereitgestellt.

Die Wärmebeaufschlagung erfolgt dabei vorliegend am Ende des Sinterverfahrens in einer oxidierenden Atmosphäre bei ca. 1000°C bis 1300°C.

Der Kompositwerkstoff bietet somit den besonderen Vorteil, dass die oxidations- und korrosionsfeste Oberflächenschicht gleichzeitig mit dem auf die Formgebung folgenden Verdichtungsverfahren bereitstellbar ist. Ein zusätzlicher Arbeitsaufwand für ein nachträgliches Aufbringen/Ausbilden der Oberflächenschicht entfällt somit.

In einem zweiten Ausführungsbeispiel liegt die oxidations- und korrosionsfeste Oberflächenschicht als Schicht aus ZrSi04 vor, welche ebenfalls durch eine Wärmebeaufschlagung in einer oxidierenden Atmosphäre bereitstellbar ist, wobei die Wärmebeaufschlagung in einem Temperaturbereich von ca. 1200°C bis 1600°C erfolgt und wobei durch die Wärmebeaufschlagung eine vollständige oder teilweise Umwandlung der Schicht aus Si02 und Zr02 in glasphasenfreies und kristallines ZrSi04 bewirkt wird.

Durch die Ausbildung der Oberflächenschicht als ZrSi04-Schicht wird auf besonders vorteilhafte Art und Weise eine nochmals verbesserte Oxidations- und Korrosionsbeständigkeit des erfindungsgemäßen Kompositwerkstoffs bereitgestellt.

Erfindungsgemäß sind sowohl die Oberflächenschicht aus Si02 und Zr02 als auch die Oberflächenschicht aus ZrSi04 über jeweils zu wählende Auslagerungsbedingungen in einem Bereich zwischen 10 und einigen 100 µm einstellbar.

Ein erfindungsgemäßes Verfahren kann gemäß folgendem Ausführungsbeispiel durchgeführt werden.

Zur Herstellung des erfindungsgemäßen Kompositwerkstoffs werden zunächst entsprechende Materialmischungen durch Dispergierung des Siliziumnitrid- und des Zirkonoxidpulvers und in wässrigem Medium unter Zusatz entsprechender Additive (Verflüssiger, Entschäumer, Sinterhilfsmittel, Binder oder Presshilfsmittel) hergestellt, wobei die Eigenschaften resultierender Kompositwerkstoffe in Tabelle 1 dargestellt sind.

Zur Einstellung der Sinteraktivität werden diese Suspensionen anschließend in einer Attritor- oder Kugelmühle auf die gewünschte Kornfeinheit und spezifische Oberfläche gemahlen.

Die für eine anschließende Formgebung und Grünbearbeitung nötigen Bindemittel, Weichmacher und Presshilfsmittel werden anschließend der Suspension zugesetzt und diese nochmals homogenisiert.

Die Weiterverarbeitung der Materialmischung zu einem feinen, gut rieselfähigen und verpressbaren Granulat erfolgt im Anschluss durch Verdüsen und Trocknung der Suspension mittels Sprüh- beziehungsweise Wirbelschichtgranulation.

Die hergestellten Granulate werden anschließend über die Formgebungsverfahren kaltisostatisches Pressen (CIP), beziehungsweise uniaxiales Trockenpressen, gegebenenfalls mit kaltisostatischer Nachverdichtung, zu Grünkörpern verarbeitet und bei Bedarf hinsichtlich Geometrie, Maßhaltigkeit, Toleranz und Oberflächengüte durch spanende Verfahren, beispielsweise Bohren, Drehen, Fräsen oder Schleifen im Grünzustand möglichst endkonturnah nachbearbeitet. Anschließend erfolgt ein thermischer Entbinderungsschritt zum Entfernen aller für das anschließende Sintern nachteiligen, für die Formgebung jedoch nötigen, organischen Bestandteile.

Das Sintern der Formkörper erfolgt danach, je nach Additiv-Variante (Sinteradditivtyp und -gehalt), bei Temperaturen zwischen 1600°C und 1900°C in einem Gasdrucksinterofen unter nichtoxidierender Atmosphäre mit zeitweisem Aufbringen eines Gasdruckes von 0,5 bis 10 MPa.

Durch das Verfahren sind keramische Kompositwerkstoffe mit Eigenschaften und Materialwerten bereitstellbar, wie sie an nachfolgenden zwei Beispielen dargestellt sind:

**Tabelle 1: Werkstoffeigenschaften von Si3N4-ZrO2-Kompositwerkstoffen**

| Eigenschaften | SN-Zr02 I | SN-ZrO2 II |
|---|---|---|
| Härte Hv 10 [GPa] | 15 | 16 |
| KIC [MPa m0,5] | 5,8 | 6,3 |
| *σ_{RT}*(40/20) [MPa] | 541 ± 24 | 581 ± 72 |
| Weibull-Modul | 2 | 7 |
| E-Modul [GPa] | 194 | 235 |
| relative Dichte (%) | 99,6 | 99,8 |

Die Ermittlung der Materialwerte erfolgt vorzugsweise wie nachfolgend beschrieben.

Die Dichte der Keramik wird durch Gegenrechnung der Proben- beziehungsweise Bauteildichte, mit der Messmethode nach Archimedes ermittelt, und der Reindichte des sinterverdichteten Grundkompositwerkstoffes, ermittelt über Heliumpyknometriemessung an einer feinstpulverisierten Werkstoffprobe, ermittelt. Aus den hergestellten Keramikproben beziehungsweise -bauteilen werden anschließend Prüfkörper für die Ermittlung der 3- beziehungsweise 4-Punkt-Biegefestigkeit gemäß DIN EN 843-1 herausgearbeitet und gemessen.

Die Ermittlung des E-Moduls erfolgt durch Auswertung des Spannungs-Dehnungs-Verhältnisses aus der 3- beziehungsweise 4-Punkt-Biegeprüfung gemäß der Norm DIN EN 843-2, Verfahren A.

Die Prüfung der Härte erfolgt durch Vickers-HV20-Härteeindrücke gemäß der Norm DIN EN 843-4 an feinpolierten Werkstoffanschliffen.
Die Prüfung der Risszähigkeit erfolgt durch das Ausmessen der von den Ecken der Härteeindrücke ausgehenden Risse und Berechnung gemäß der Formel für die Risszähigkeit Klc nach Niihara.

Die statistische Auswertung aller ermittelten mechanischen Kennwerte erfolgt nach der für monolithische Keramiken erlassenen Norm DIN EN 843-5.
Ein erfindungsgemäßes metallurgiewerkstoffberührendes Bauteil ist in einem ersten Ausführungsbeispiel als Thermoelementschutz- oder als Heizrohr mit einer bevorzugten Länge zwischen 100 mm und 1500 mm und einem Außendurchmesser von 10 mm bis 400 mm ausgebildet.
Das Heizrohr ist vorliegend einseitig geschlossen und weist eine Endkalotte auf.

Ferner ist an dem gegenüberliegenden Ende eine durch Hartbearbeitung eingebrachte Nut zur Befestigung in einer geeigneten Aufnahme vorgesehen.

Aufgrund seiner Ausbildung aus dem erfindungsgemäßen Kompositwerkstoff weist das vorliegende Thermoelementschutz- oder Heizrohr die technologischen Vorteile der Korrosions- und Oxidationsbeständigkeit, der hohen Festigkeit und des geringen Anhaftungsvermögens auf.

Speziell durch das geringe Anhaftungsvermögen können Anhaftungen, welche bei herkömmlichen Teilen zu einer starken Massezunahme am Bauteil führen und in Kombination mit einer geringen Bauteilfestigkeit zu einem Bauteilversagen führen können, vermieden werden.

Darüber hinaus weist ein erfindungsgemäßes Thermoelementschutz- oder Heizrohr, im Vergleich zu herkömmlichen Vorrichtungen, eine deutlich längere Standzeit auf.

Ferner ermöglicht die gute Wärmeleitfähigkeit eine schnellere Wärme- und Temperaturübertragung ins Innere eines Thermoelementschutzrohres beziehungsweise von einem Heizrohr nach außen in die Schmelze.

In einem weiteren Ausführungsbeispiel ist ein metallurgiewerkstoffberührendes Bauteil als zylindrische Walze zum Warmumformen von Werkstücken bei bis zu 1200°C ausgebildet.

Die Walze weist erfindungsgemäß an deren Außenseite eine radial eingebrachte Walznut auf, wobei die Geometrie der Walznut an die gewünschte Geometrie des umzuformenden Werkstücks angepasst ist.

Die erfindungsgemäße Walze weist als technologische Vorteile eine hohe Härte sowie Schadenstoleranz auf, wodurch sich zum einen eine besonders lange Standzeit und ein geringer Verschleiß der Walze ergeben und wobei gleichzeitig über die gesamte Lebensdauer der Walze eine gleichbleibende Oberflächenqualität des Endprodukts gewährleistet werden kann.

Insbesondere durch die gleichbleibende Oberflächenqualität kann auf ein gesondertes Kaltwalzen der Werkstücke, zum Bereitstellen einer qualitativ hochwertigen Oberfläche, verzichtet werden.

In einem dritten Ausführungsbeispiel ist ein erfindungsgemäßes Bauteil zur Wärmebehandlung von Werkstücken als Chargierblech zur Auflage für wärmezubehandelnde Bauteile in einem konventionell beheizten Ofen ausgebildet.

Die Vorteile eines derartig ausgebildeten Chargierblechs liegen insbesondere in dessen langer Standzeit und Lebensdauer sowie in der hohen Festigkeit, aufgrund derer das Chargierblech besonders dünn ausgebildet werden kann.

Die dünne Ausbildung des Chargierblechs wirkt sich besonders vorteilhaft auf den Platzbedarf innerhalb des Ofens sowie auf die notwendigen Aufheizzeiten.

In einem weiteren Ausführungsbeispiel ist ein Bauteil zur Wärmebehandlung von Werkstücken als Transportkette für Werkstücke innerhalb eines Induktionsofens ausgebildet.

In diesem Fall liegt der besondere Vorteil der Transportkette darin, dass dieses, aufgrund dessen Ausbildung aus dem erfindungsgemäßen Kompositwerkstoff, nicht in das induktive Feld des Ofens einkoppelt und so erhebliche Energieverluste durch das unbeabsichtigte Mitaufheizen der Transportkette vermieden werden können.

## Patentansprüche

1. Keramischer Kompositwerkstoff, aufweisend ein Grundkomposit und eine Oberflächenschicht, wobei das Grundkomposit durch einen Stoffanteil Si3N4 und einen Stoffanteil Zr02 gebildet wird und wobei die beiden Stoffanteile miteinander vermischt vorliegen, und wobei die Oberflächenschicht oxidations- und korrosionsbeständig ausgebildet ist und aus Si02 und Zr02 und/oder ZrSi04 besteht und wobei die Oberflächenschicht durch eine Wärmebehandlung des Grundkomposits und eine dadurch bewirkbare, oberflächennahe chemische Stoffumwandlung bereitgestellt wird.

2. Keramischer Kompositwerkstoff nach Anspruch 1,
wobei die Oberflächenschicht aus Si02 und Zr02 durch eine Wärmebehandlung des Grundkomposits in einer oxidierenden Atmosphäre bereitgestellt wird.

3. Keramischer Kompositwerkstoff nach Anspruch 2,
wobei die Oberflächenschicht aus ZrSi04 durch eine Wärmebehandlung der Oberflächenschicht aus Si02 und Zr02 in einer oxidierenden Atmosphäre bereitgestellt wird.

4. Metallurgiewerkstoffberührendes Bauteil, gebildet durch einen keramischen Kompositwerkstoff gemäß einem der Ansprüche 1 bis 4, wobei der Metallurgiewerkstoff als Schmelze, umzuformendes oder wärmebehandelndes Material vorliegt.

5. Metallurgiewerkstoffberührendes Bauteil nach Anspruch 5,
wobei das Bauteil als Bestandteil eines Schmelzofens, eines Umformwerkzeugs oder einer Wärmebehandlungsanlage ausgebildet ist.

6. Verfahren zur Herstellung eines keramischen Kompositwerkstoffs gemäß Anspruch 1,
aufweisend die folgenden Verfahrensschritte:
a) Vermischen eines Stoffanteils Si3N4 mit einem Stoff-anteil Zr02 zu einem Grundkomposit,
b) Formgeben des Grundkomposits,
c) Wärmebehandeln des geformten Grundkomposits, wobei aus dem Grundkomposit eine oxidations- und korrosionsbeständige Oberflächenschicht aus Si02 und Zr02 und/oder ZrSi04 ausgebildet wird.

7. Verfahren nach Anspruch 6, wobei die Wärmebehandlung gemäß Verfahrensschritt c) zur Ausbildung einer Oberflächenschicht aus Si02 und Zr02 in einem Temperaturbereich von 1000°C bis 1300°C und in einer oxidierenden Atmosphäre durchgeführt wird.

8. Verfahren zur Herstellung eines keramischen Kompositwerkstoffs gemäß Anspruch 3,
aufweisend die Verfahrensschritte nach Anspruch 6, wobei die Wärmebehandlung gemäß Verfahrensschritt c) zur zumindest teilweisen Ausbildung einer Oberflächenschicht aus ZrSi04 in einem Temperaturbereich von 1200°C bis 1600°C durchgeführt wird.
